# EUROPÄISCHE PATENTSCHRIFT

(11) **EP 3 843 950 B1**
(45) Veröffentlichungstag und Bekanntmachung des Hinweises auf die Patenterteilung: **24.08.2022**
(21) Anmeldenummer: 19812709.4
(22) Anmeldetag: 18.11.2019
(51) Int. Cl.: B25J 9/00, B23P 19/06, B25J 11/00

(54) **VORRICHTUNG ZUR FORM- UND/ODER KRAFTSCHLÜSSIGEN VERBINDUNG UND VERFAHREN**
APPARATUS FOR POSITIVE AND/OR NON-POSITIVE CONNECTION AND METHOD
DISPOSITIF DE LIAISON PAR COMPLÉMENTARITÉ DE FORME ET / OU DE FORCE ET PROCÉDÉ

(30) Priorität: 21.11.2018 EP 18207502
(43) Veröffentlichungstag der Anmeldung: 07.07.2021
(73) Patentinhaber: Siemens Aktiengesellschaft, 80333 München (DE)
(72) Erfinder: BRUCKSCH, Michael, 96155 Buttenheim (DE)
(86) Internationale Anmeldenummer: PCT/EP2019/081601
(87) Internationale Veröffentlichungsnummer: WO 2020/104354

(56) Entgegenhaltungen:
- WO-A1-2017/145349
- WO-A1-2017/188127
- DE-A1-102013 227 147
- DE-A1-102015 210 255
- US-A- 4 773 156
- US-A1- 2011 048 649
- US-A1- 2016 031 051

## Beschreibung

Die Erfindung betrifft eine Vorrichtung zur form- und/oder kraftschlüssigen Verbindung wenigstens eines Werkstücks mit wenigstens einem Verbindungselement sowie ein Verfahren.

Die Patentschrift WO 2017/188127 A1 offenbart hierzu ein Komponentenmontagesystem, bei dem eine Komponente unter Verwendung eines Befestigungselements an einem Rahmenelement montiert wird.

Die DE 10 2013 227147 A1 betrifft ein Verfahren zum automatisierten Drehfügen und/oder Drehlösen von Bauteilen.

In einer in US 4 773 156 A offenbarten Vorrichtung zum Befestigen von Teilen an einem Montagekörper empfängt eine Teilefördereinrichtung mehrere Teile, die auf Losbasis angeordnet sind, aus einem Teilelager.

US 2011/048649 A1 betrifft eine Reifenmontagevorrichtung, US 2016/031051 A1 eine Schraubenspannvorrichtung.

In der Patentschrift DE 10 2015 210255 A1 werden ein Verfahren sowie eine Anordnung zum Oberflächenbearbeiten eines stationär gelagerten Werkstückes mit einem an einem Knickarmroboter endseitig angebrachten und von diesem räumlich positionierbaren Werkzeug beschrieben.

In einem Roboterarmsteuersystem gemäß WO 2017/145349 A1 liest zuerst eine erste Kamera eines ersten Arms einen zweidimensionalen Strichcode, der an einem Werkstück angebracht ist. Als nächstes nimmt eine Spannvorrichtungseinheit des ersten Arms eine Spannplatte heraus, das dem durch den zweidimensionalen Strichcode aus einer Spannplattentabelle angegebenen Werkstücktyp entspricht, positioniert und platziert die Spannplatte auf dem Werkstück in einer vorbestimmten Positionsbeziehung und drückt mit der Spannplatte auf das Werkstück. Eine Schraubenbefestigungseinheit eines zweiten Arms schraubt die Schrauben in Schraubenlöcher des Werkstücks unter Verwendung von Führungslöchern der Spannplatte, die auf das Werkstück drücken.

Aus dem Stand der Technik sind Roboter bekannt, die an ihrem Effektor eine Schraubvorrichtung aufweisen. Diese können Schrauben in ein auf einem Tisch liegendes Werkstück eindrehen.

Jedoch können auf diese Weise nicht alle Seiten des Werkstücks bearbeitet werden.

Der Erfindung liegt daher die Aufgabe zugrunde, eine Vorrichtung zu schaffen, die ein Eindrehen von Schrauben auf allen Werkstückseiten ermöglicht.

Die Lösung der Aufgabe gelingt durch Anspruch 1, d. h. eine Vorrichtung zur form- und/oder kraftschlüssigen Verbindung wenigstens eines Werkstücks mit wenigstens einem Verbindungselement, aufweisend wenigstens einen Roboter zur Positionierung des Werkstücks, wenigstens eine Spindel zum Verbinden des Verbindungselements mit dem Werkstück, wenigstens ein Auflager zur Stabilisierung des Werkstücks während der Verbindung des Verbindungselements mit dem Werkstück, wobei ein Kontaktbereich des Auflagers, welcher während der Verbindung des Verbindungselements mit dem Werkstück mit dem Werkstück in Kontakt steht, im Wesentlichen in der Flucht der Spindellängsachse liegt und der Kontaktbereich kleiner als 0,01 m², insbesondere kleiner als 0,0001 m², ist, wenigstens ein zweites Auflager zur Stabilisierung des Werkstücks während einer Verbindung des Verbindungselements mit dem Werkstück, wobei eine Auflagefläche des Auflagers im Zustand der Auflagerung des Werkstücks in einer bezüglich einer wenigstens im Wesentlichen orthogonalen Achse zur Spindellängsachse in einer anderen Ebene liegt als eine Auflagefläche des zweiten Auflagers .

Vorzugsweise ist die Spindel eine Schraubspindel. Das Verbindungsmittel ist vorzugsweise eine Schraube.

Jedoch ist die Vorrichtung auch für andere Verbindungselemente wie Nägel und Nieten geeignet.

Mit der Definition, wonach der Kontaktbereich des Auflagers im Wesentlichen in der Flucht der Spindellängsachse liegt, sind insbesondere ebenso die Szenarien umfasst, bei denen der Kontaktbereich des Auflagers mit einem fiktiven Kugelkörper überlappt, welcher einen Radius von 5 cm aufweist und als Zentrum den Schnittpunkt der Spindellängsachse mit der Werkstückseitenfläche, die im Kontakt mit dem Auflager steht, aufweist.

Die räumliche Zuordnung des Kontaktbereichs zur Spindellängsachse bzw. zum Kugelkörper liegt insbesondere in dem Moment der Kontaktierung des Kontaktbereichs mit dem Werkstück vor.

Das Auflager ist insbesondere gegenüber seiner Umgebung erhaben.

In einer vorteilhaften Ausführungsform der Erfindung weist das Auflager eine Auflagerlängsachse auf. Die Auflagerlängsachse schneidet vorzugsweise den Kugelkörper.

Vorzugsweise entspricht die Auflagerlängsachse des Auflagers im Wesentlichen der Spindellängsachse der Spindel.

Während der Verbindung von Werkstück und Verbindungselement steht das Auflager und/oder das Auflagerelement vorzugsweise in Kontakt mit dem Werkstück.

Das Werkstück liegt während der Verbindung, vorzugsweise mit seiner Unterseite, auf dem Kontaktbereich des Auflagers und/oder Auflagerelements auf.

Da vorzugsweise die Auflagerlängsachse des Auflagers im Wesentlichen der Spindellängsachse der Spindel entspricht, wird das Werkstück an der Stelle gestützt, an welcher die Schraube eingedreht wird.

In einer vorteilhaften Ausführungsform der Erfindung ist das Auflager und/oder wenigstens ein Auflagerelement des Auflagers, welches den Kontaktbereich umfasst, entlang einer Auflagerlängsachse verfahrbar ausgebildet ist.

Das Auflagerelement umfasst den Kontaktbereich des Auflagers, welcher während der Verbindung des Verbindungselements mit dem Werkstück mit dem Werkstück in Kontakt steht.

Vorzugsweise ist das Auflager und/oder Auflagerelement mittels Pneumatik verfahrbar.

Ein Verfahren des Auflagers bzw. Auflagerelements mittels Pneumatik ist vorteilhaft, da Luft in beliebiger Menge zur Verfügung steht und entstehende Abluft ins Freie entweichen kann, weshalb keine Rückleitung nötig ist wie beispielsweise bei hydraulischen oder elektrischen Systemen (die aber ebenso angewendet werden können).

Druckluft ist zudem gut speicherbar. Pneumatische Systeme, insbesondere Hubsysteme, sind zudem besonders leicht.

Das Auflager und/oder Auflagerelement ist vorzugsweise zylindrisch ausgebildet.

In einer weiteren vorteilhaften Ausführungsform der Erfindung weist die Vorrichtung eine erste Steuereinheit und eine zweite Steuereinheit auf, wobei die erste Steuereinheit zur Steuerung des Roboters vorgesehen ist und die zweite Steuereinheit zur Steuerung des Auflagers, der Spindel und der ersten Steuereinheit vorgesehen ist.

Vorzugsweise steuert die erste Steuereinheit alle Bewegungen und Aktionen des Roboters. Vorzugsweise ist die erste Steuereinheit in den Roboter integriert.

Vorzugsweise die zweite Steuereinheit kennt die Position des Werkstücks und/oder gibt beispielsweise vor, wie weit das Auflager und/oder Auflagerelement verfahren werden soll, um das Werkstück optimal zu stützen.

Diese beschriebene Ausführungsform ist besonders preiswert.

In einer alternativen vorteilhaften Ausführungsform der Erfindung weist die Vorrichtung wenigstens eine übergeordnete Steuereinheit auf.

Vorzugsweise weist der Roboter wenigstens eine Roboter-Steuereinheit auf.

Vorzugsweise weist die Spindel wenigstens eine Spindel-Steuereinheit auf.

Vorzugsweise weist das Auflager wenigstens eine Auflager-Steuereinheit auf.

Die Roboter-Steuereinheit, Spindel-Steuereinheit und Auflager-Steuereinheit sind in der alternativen Ausführungsform vorzugsweise mit der übergeordneten Steuereinheit verbunden.

Diese Ausführungsform ermöglicht einen leichten Austausch einzelner Komponenten, da Spindel, Roboter und Auflager über eine eigene Steuereinheit verfügen.

In einer weiteren vorteilhaften Ausführungsform der Erfindung ist der Roboter ein Leichtbauroboter.

Leichtbauroboter sind meist so leicht, dass sie von einer Person getragen werden können. Zudem kann der Leichtbauroboter Positionieraufgaben mittels eines "Teach-In"-Verfahrens auf einfache Weise lernen.

Der Leichtbauroboter umfasst vorzugsweise Sensoren, die eine Kollision erkennen. Der Leichtbauroboter stoppt selbstständig. Dieser Kollisionsschutz ermöglicht eine Mensch-Roboter-Kollaboration ohne Schutzkäfig.

In einer weiteren vorteilhaften Ausführungsform der Erfindung weist der Roboter jeweils eine Armteillänge von weniger als 1 m, insbesondere weniger als 50 cm, auf.

Armteillänge bedeutet hierbei die Länge von einem Gelenk zum benachbarten Gelenk.

Vorzugsweise ist die Armteillänge jeweils länger als 20 cm.

Der Roboter ist dadurch sehr kompakt. Anlagen und erfindungsgemäße Vorrichtungen sind somit ebenso kompakt und klein ausführbar.

In einer weiteren vorteilhaften Ausführungsform der Erfindung weist der Roboter an wenigstens einem Effektor wenigstens eine Werkstückaufnahmeeinheit auf.

Der Effektor ist bekanntlich das letzte Armglied eines Roboters. Die Werkstückaufnahmeeinheit dient einer Aufnahme des Werkstücks.

Beispielsweise ist das Werkstück auf einem Tisch abgelegt. Die Werkstückaufnahmeeinheit kann das Werkstück aufnehmen, damit es durch den Roboter richtig positioniert werden kann.

Der Effektor ist vorzugsweise entlang von wenigstens fünf Bewegungsachsen zur freien Bewegung des Werkstücks im Raum bewegbar. Auf diese Weise ist jeder Raumpunkt anfahrbar.

Vorzugsweise sind wenigstens drei Bewegungsachsen des Effektors Rotationsachsen.

Bevorzugt sind jedoch alle Bewegungsachsen des Effektors Rotationsachsen.

In einer weiteren vorteilhaften Ausführungsform der Erfindung umfasst die Werkstückaufnahmeeinheit wenigstens einen Saugnapf zur Aufnahme des Werkstücks.

Der Saugnapf weist vorzugsweise elastisches Material auf.

Der Saugnapf wird vorzugsweise auf das Werkstück gepresst.

Der Saugnapf eignet sich besonders gut zur temporären Befestigung des Werkstücks, da durch seine Saugkraft ein hohes Gewicht getragen werden kann.

Vorzugsweise weist die Werkstückaufnahmeeinheit eine Mehrzahl an Saugnäpfen auf.

Vorzugsweise weist die Werkstückaufnahmeeinheit wenigstens zwei Saugnäpfe auf.

Vorzugsweise weist die Werkstückaufnahmeeinheit, insbesondere eine Werkstückaufnahmeeinheit, die hohe Lasten sicher und zuverlässig tragen soll, wenigstens vier Saugnäpfe auf.

In einer weiteren vorteilhaften Ausführungsform der Erfindung umfasst die Werkstückaufnahmeeinheit wenigstens ein Gegenlager zur Stabilisierung des Werkstücks.

Auf diese Weise kann das aufgenommene Werkstück besonders gut stabilisiert werden.

Das Gegenlager ist vorzugsweise zylindrisch ausgebildet.

Das Gegenlager ist vorzugsweise derart ausgebildet, dass bei einem durch den wenigstens einen Saugnapf aufgenommenen Werkstück das Gegenlager in Kontakt mit dem Werkstück steht.

Vorzugsweise weist die Werkstückaufnahmeeinheit eine Mehrzahl an Gegenlagern auf.

Vorzugsweise weist die Werkstückaufnahmeeinheit wenigstens zwei Gegenlager auf.

Vorzugsweise weist die Werkstückaufnahmeeinheit, insbesondere eine Werkstückaufnahmeeinheit, die ein Kippen des aufgenommenen Werkstücks während der Verbindung mit dem Verbindungselement zuverlässig verhindern soll, wenigstens vier Saugnäpfe auf.

Das wenigstens eine Gegenlager eignet sich besonders gut als Stütze.

In einer weiteren vorteilhaften Ausführungsform der Erfindung ist die Spindel starr.

Starr bedeutet hierbei, dass die Spindel nicht beweglich und fest an einem Punkt im Raum angeordnet ist.

Eine derartige Spindel ist weniger fehleranfällig, da sie weniger mechanische Teile aufweist. Zudem kann eine derartige Spindel kostengünstig realisiert werden.

In einer weiteren vorteilhaften Ausführungsform der Erfindung ist ein Endglied der Spindel entlang der Spindellängsachse verfahrbar.

Das Spindelendglied trägt vorzugsweise das Verbindungselement, insbesondere die Schraube.

In einer weiteren vorteilhaften Ausführungsform der Erfindung ist das Endglied der Spindel um die Spindellängsachse rotierbar.

Das Eindrehen der Schraube gelingt besonders gut, bei Rotation des Spindelendglieds um die Spindellängsachse und einem gleichzeitigen Vorschub entlang der Spindellängsachse in Richtung des Werkstücks.

Das Spindelendglied rotiert vorzugsweise in einem Drehzahlbereich von 10 bis 500 Umdrehungen pro Minute.

Diese Ausführungsform ermöglicht ein effizientes Eindrehen der Schraube in das Werkstück.

Eine Eindrehgeschwindigkeit ist vorzugsweise abhängig von einer Geometrie des Verbindungsmittels, insbesondere Schraube. Eine Schraube mit Gewinde M4 wird beispielsweise zwischen 0,6 mm und 0,8 mm, insbesondere 0,7 mm, pro Umdrehung in das Werkstück eingedreht.

Eine Schraube mit Gewinde M6 wird beispielsweise zwischen 0,9 mm und 1,1 mm, insbesondere 1,0 mm, pro Umdrehung eingedreht.

In einer weiteren vorteilhaften Ausführungsform der Erfindung weist die Spindel eine Zuführungseinheit zur automatischen Zuführung von Verbindungselementen auf.

Dies ist beispielsweise ein Trichter oder ein anderes Vorratsbehältnis gefüllt mit Schrauben und/oder anderen Verbindungselementen sowie eine Zuführungsleitung zum Spindelendglied.

Die Vorrichtung weist wenigstens ein zweites Auflager zur Stabilisierung des Werkstücks während einer Verbindung des Verbindungselements mit dem Werkstück auf.

Das zweite Auflager ist vorzugsweise starr.

Mittels des Roboters kann auf diese Weise das Werkstück derart positioniert werden, dass bei dem Schritt der Verbindung des Verbindungselements mit dem Werkstück das Werkstück zur Stabilisierung auf dem ersten oder dem zweiten Auflager aufliegt.

Das zweite Auflager liegt insbesondere nicht in der Längsachse des ersten Auflagers.

Hierdurch kann in Abhängigkeit der Geometrie des Werkstücks in Bezug zur Position der Öffnung für das Verbindungselement am Werkstück das erste oder zweite Auflager gewählt werden.

Folglich kann bei einer Verbindung des Verbindungselements mit dem Werkstück ebenso ein Gegenlager durch das zweite Auflager realisiert werden, wenn in der Flucht der Spindelachse an der zum Auflager gerichteten Seitenfläche des Werkstücks ein sensibler Baukörper vorliegt, welcher nur einer geringen mechanischen Belastung standhält.

Vorzugsweise ist das zweite Auflager parallel zum Auflager ausgebildet und hat eine Stützfunktion.

Vorzugsweise weist die Vorrichtung ein gleich ausgebildetes drittes Auflager auf.

Eine Auflagefläche des Auflagers liegt im Zustand der Auflagerung des Werkstücks in einer bezüglich einer wenigstens im Wesentlichen orthogonalen Achse zur Spindellängsachse in einer anderen Ebene als eine Auflagefläche des zweiten Auflagers.

Vorzugsweise liegt die Auflagefläche des Auflagers im Zustand der Auflagerung des Werkstücks in einer bezüglich einer wenigstens im Wesentlichen orthogonalen Achse zur Spindellängsachse in einer anderen Ebene als eine Auflagefläche des dritten Auflagers.

Vorzugsweise liegt die Auflagefläche des zweiten Auflagers im Zustand der Auflagerung des Werkstücks in einer bezüglich einer wenigstens im Wesentlichen orthogonalen Achse zur Spindellängsachse in der gleichen Ebene wie die Auflagefläche des dritten Auflagers.

In einer weiteren vorteilhaften Ausführungsform der Erfindung weist die Vorrichtung wenigstens eine Kamera und/oder wenigstens einen visuellen Sensor auf.

Beispielsweise kann damit dokumentiert werden, mit welchen Werten die Schrauben in das Werkstück eingedreht wurden. Es werden insbesondere ein Anzugsmoment, ein Anzugswinkel und eine Tiefe erfasst.

Das bereits beschriebene Gegenlager hilft bei der genauen Ermittlung der Tiefe. Ohne Gegenlager würde der Roboter abweichen und Messwerte verfälscht.

Erfasste Daten werden vorzugsweise in einer Datenbank gespeichert, insbesondere für Traceability und Optimierungen an der Vorrichtung.

Die Vorrichtung ist zur Verbindung eines Werkstücks mit einem Verbindungselement, insbesondere Schraube, geeignet.

Die Vorrichtung ist ebenso geeignet, zwei Werkstücke durch das Verbindungselement miteinander zu verbinden.

Die Lösung der o. g. Aufgabe gelingt ferner durch Anspruch 14, d. h. ein Verfahren zum form- und/oder kraftschlüssigen Verbinden wenigstens eines Werkstücks mit wenigstens einem

Verbindungselement mit einer derartigen Vorrichtung mit folgenden Schritten:
- Aufnahme des Werkstücks durch die Werkstückaufnahmeeinheit,
- Positionierung des Werkstücks durch den Roboter,
- Kontaktierung des Kontaktbereichs des Auflagers mit dem Werkstück,
- Verfahren des Endglieds der Spindel in Richtung der Spindellängsachse,
- Verbinden des Verbindungselements mit dem Werkstück durch eine Rotationsbewegung der Spindel.

Die erstmalige Kontaktierung des Kontaktbereichs des Auflagers mit dem Werkstück erfolgt vorzugsweise nach der Aufnahme des Werkstücks durch die Werkstückaufnahmeeinheit. Bei einem verfahrbaren Auflager erfolgt die erstmalige Kontaktierung des Kontaktbereichs des Auflagers mit dem Werkstück vorzugsweise nach der der Positionierung des Werkstücks durch den Roboter.

In einer vorteilhaften Ausführungsform der Erfindung wird das Auflager und/oder das Auflagerelement in Richtung der Auflagerlängsachse bis zum Kontakt des Kontaktbereichs des Auflagers/Auflagerelements mit dem Werkstück verfahren.

Das Werkstück wird vorzugsweise frei im Raum positioniert und das Auflager und/oder Auflagerelement wird bis zum Kontakt mit dem Werkstück entlang der Auflagerlängsachse, die der Spindellängsachse entspricht, verfahren.

Das Werkstück wird hierbei punktuell gestützt.

Das Verfahren schafft durch axialen Vorschub und Rotation auf effiziente Weise eine Verbindung von Werkstück und Verbindungselement. Zudem wird das Werkstück gestützt, weshalb das Verbindungelement punktgenau eingebracht wird.

Vorzugsweise wird das Werkstück derart positioniert, dass eine Längsachse eines Verbindungskanals am Werkstück der Spindellängsachse entspricht.

Vorzugsweise ist der Verbindungskanal bereits vorhanden, insbesondere durch eine bereits getätigte Bohrung. Vorzugsweise weist das Werkstück bereits ein Gewinde im Verbindungskanal auf.

In einer weiteren vorteilhaften Ausführungsform der Erfindung wird das Werkstück auf dem zweiten und/oder dritten Auflager abgelegt.

Das zweite und dritte Auflager sind vorzugsweise starr. Diese Ausführungsform ist besonders gut für große und/oder schwere Werkstücke geeignet.

Im Folgenden wird die Erfindung anhand der in den Figuren dargestellten Ausführungsbespiele näher beschreiben und erläutert. Es zeigen:
- FIG 1: eine mögliche Ausführung der erfindungsgemäßen Vorrichtung zum form- und/oder kraftschlüssigen Verbinden wenigstens eines Werkstückes mit wenigstens einem Verbindungselement,
- FIG 2: einen möglichen Ablauf des erfindungsgemäßen Verfahrens zum form- und/oder kraftschlüssigen Verbinden wenigstens eines Werkstücks mit wenigstens einem Verbindungselement mit einer derartigen Vorrichtung,
- FIG 3: eine weitere mögliche Ausführung der erfindungsgemäßen Vorrichtung zum form- und/oder kraftschlüssigen Verbinden wenigstens eines Werkstückes mit wenigstens einem Verbindungselement.

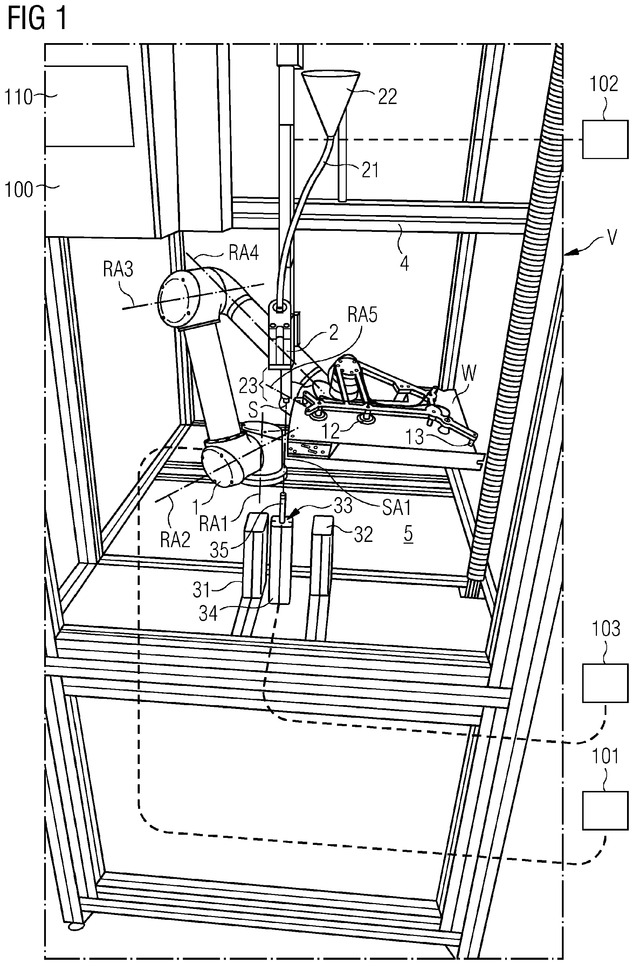

FIG 1 zeigt eine mögliche Ausführung der erfindungsgemäßen Vorrichtung V zur form- und/oder kraftschlüssigen Verbindung wenigstens eines Werkstückes W mit wenigstens einem Verbindungselement S, aufweisend einen Roboter 1 zur Positionierung des Werkstücks, eine Spindel 2 zum Verbinden der Verbindungselements S mit dem Werkstück W und zwei verschiedene Arten von Auflagern 31, 32, 33 zur Stabilisierung des Werkstücks W während der Verbindung des Verbindungselements S mit dem Werkstück.

Die Figur zeigt einen Roboter 1, insbesondere einen Leichtbauroboter. Der Roboter weist fünf Bewegungsachsen RA1...5 auf. Diese Bewegungsachsen RA1...5 sind Rotationsachsen. Diese Bewegungsachsen ermöglichen, dass ein Werkstück W, welches der Roboter 1 mit einer Werkstückaufnahmeeinheit 11 an seinem Effektor aufgenommen hat, jeden Raumpunkt erreichen kann.

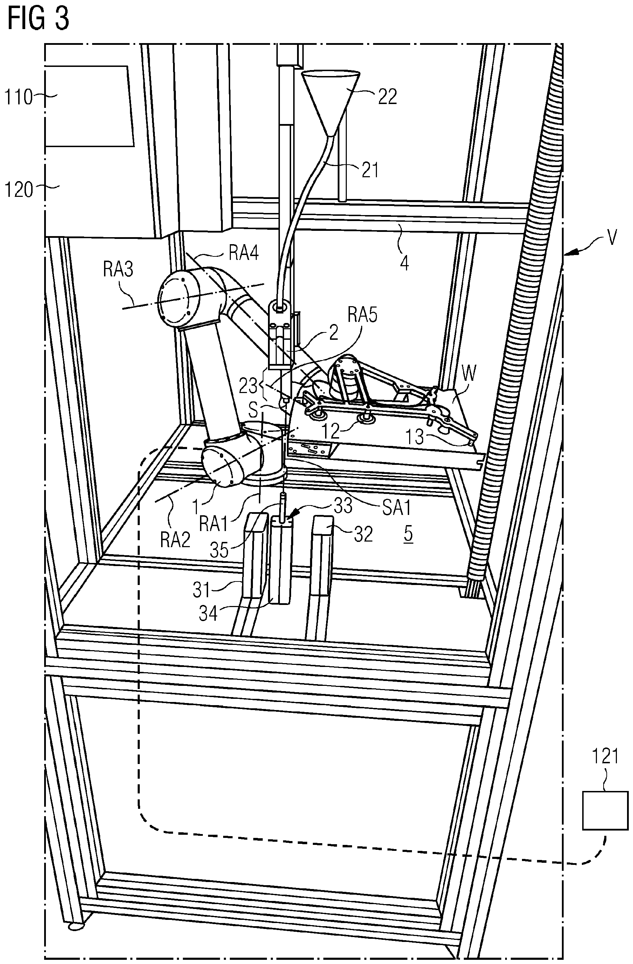

Die Werkstückaufnahmeeinheit 11 weist in der Figur 3 Saugnäpfe 12 sowie Gegenlager 13 auf. Das Gegenlager 13 dient einer Stabilisierung des aufgenommenen Werkstücks W.

Die Figur zeigt, dass der Roboter auf einer Fläche 5, die vorzugsweise parallel zur Erdoberfläche ausgerichtet ist, fixiert ist.

Zudem sind auch die Auflager 31, 32 und 33 auf dieser Fläche 5 fixiert.

Die Figur zeigt, dass die beiden Auflager 31 und 32 starre Auflager sind. Sie sind nicht verfahrbar.

Der Auflager 33 ist ein verfahrbarer Auflager mit einem starren Auflagerelement 34 und einem verfahrbaren Auflagerelement 35. Die Figur zeigt, dass das verfahrbare Auflagerelement 35 schmal und zylindrisch ist. Vorteilhaft wird das Auflagerelement 35 mittels Pneumatik verfahren. Jedoch kann die mechanische Arbeit zum Verfahren des Auflagerelements 35 auch mittels Hydraulik oder einem elektrischen Antrieb verrichtet werden.

Die Spindel 2 ist, wie in der Figur gezeigt, starr, das heißt, sie ist nicht beweglich und fest an einem Punkt im Raum angeordnet.

Die Spindel 2 weist eine Zuführung für Verbindungselemente 21, insbesondere für Schrauben, auf. Die Zuführung 21 ist an einem Ende mit einer Vorratsvorrichtung 22 für Verbindungsmittel verbunden. Dies ist in der Figur ein Trichter. Die Verbindungsmittel im Trichter werden durch die Zuführung 21 zum Spindelendglied 23 geführt.

Das Spindelendglied 23 ist entlang einer Spindellängsachse SA1 verfahrbar. Dies ist nötig, damit das Verbindungsmittel in der Werkstück W eingebracht werden kann. Dies ist insbesondere nötig bei Schrauben wie auch bei beispielsweise Nägeln. Um eine Schraube durch die Spindel 2 und das Spindelendglied 23 in das Werkstück W drehen zu können, führt die Spindel eine Rotation um die Spindellängsachse FA1 aus.

Das Spindelendglied 23 liegt, wie in der Figur gezeigt, in direkter Verlängerung des verfahrbaren Teils des verfahrbaren Auflagerelements 35, das heißt, die Spindellängsachse entspricht einer Längsachse des Auflagerelements 35 (auch Auflagerlängsachse). Dies ist vorteilhaft, da beispielsweise beim Eindrehen einer Schraube in das Werkstück W eine punktuelle Stabilisierung nötig ist, welche das Auflagerelement 35 gewährleistet.

Die Spindel 2 ist an einer Schiene 4 fixiert und kann nicht verfahren werden. Die Spindel 2 ist starr. Lediglich das Spindelendglied 23 ist, wie bereits erläutert, entlang der Spindellängsachse verfahrbar sowie rund um die Spindellängsachse rotierbar.

Die Schiene 4 wird durch die beiden Seitenstützen 6 gestützt.

Die Figur zeigt zudem eine übergeordnete Steuereinheit 100 mit einem HMI 110. Zudem zeigt die Figur, dass der Roboter 1 über eine Steuereinheit 101 angesteuert wird, dass die Spindel 2 über eine Steuereinheit 102 angesteuert wird und dass der verfahrbare Auflager 33 über eine Steuereinheit 103 angesteuert wird.

Die Anordnung, Aufteilung und Anzeige der Steuereinheiten 101, 102, 103 sowie die übergeordnete Steuereinheit 100 sind optional. Es ist auch möglich, dass eine Steuereinheit alle Steuerfunktionen für Roboter, Spindel und Auflager bewerkstelligt.

Die beschriebene Vorrichtung kann in einer Kabine angeordnet sein, beispielsweise in einer Kabine mit Glasscheibe. Dies dient dem Schutz eines Bedieners.

Die Vorrichtung kann jedoch auch ohne Kabine ausgeführt sein, insbesondere dann, wenn die technischen Apparaturen insbesondere Roboter, Spindel und verfahrbarer Auflager berührungssensitiv sind und somit keine Gefährdung des Bedieners besteht.

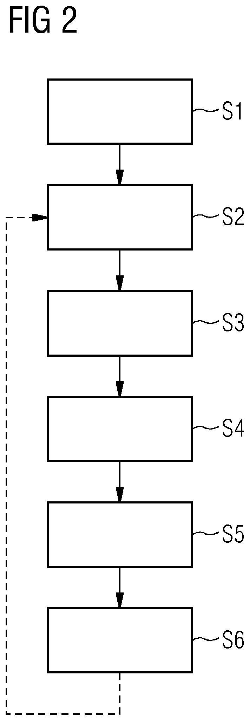

FIG 2 zeigt einen möglichen Ablauf des erfindungsgemäßen Verfahrens zum form- und/oder kraftschlüssigen Verbinden wenigstens eines Werkstücks mit wenigstens einem Verbindungselement mit einer derartigen Vorrichtung.

In einem Verfahrensschritt S1 wird das Werkstück durch die Werkstückaufnahmeeinheit aufgenommen.

Vorzugsweise wird das Werkstück durch die Saugnäpfe aufgenommen und gehalten.

In einem Verfahrensschritt S2 wird das Werkstück durch den Roboter positioniert.

Vorzugsweise wird das Werkstück derart positioniert, dass eine Längsachse eines Verbindungskanals am Werkstück der Spindellängsachse entspricht.

In einem Verfahrensschritt S3 wird das Auflager und/oder das Auflagerelement in Richtung der Auflagerlängsachse bis zum Kontakt mit dem Werkstück verfahren.

In einem Verfahrensschritt S4 wird das Endglied der Spindel in Richtung der Spindellängsachse verfahren.

In einem Verfahrensschritt S5 wird das Verbindungselement mit dem Werkstück durch eine Rotationsbewegung der Spindel verbunden.

Die Verfahrensschritte S3, S4 und S5 finden bevorzugt zur gleichen Zeit statt.

Nach erfolgter Verbindung wird vorzugsweise das Spindelendglied zurück, bevorzugt in seine Ausgangsposition, gefahren. Vorzugsweise wird auch das Auflager und/oder das Auflagerelement zurück, bevorzugt in seine Ausgangsposition, gefahren. Dies erfolgt vorzugsweise in einem Verfahrensschritt S6.

Das Werkstück kann neu positioniert werden (S2), um ein weiteres Verbindungsmittel einzubringen, insbesondere eine weitere Schraube einzudrehen.

FIG 3 zeigt eine weitere mögliche Ausführung der erfindungsgemäßen Vorrichtung V zum form- und/oder kraftschlüssigen Verbinden wenigstens eines Werkstückes W mit wenigstens einem Verbindungselement S.

Die gezeigte Ausführung ähnelt der in FIG 1 beschriebenen Ausführung. Jedoch unterscheidet sie sich bezüglich einer Ansteuerung der Komponenten.

Die Figur zeigt eine erste Steuereinheit 121, welche den Roboter 1 steuert. Vorzugsweise ist die erste Steuereinheit 121 in den Roboter integriert.

Eine zweite Steuereinheit 120 mit einem HMI 110 ist zur Steuerung des Auflagers (33), der Spindel (2) und der ersten Steuereinheit (121) vorgesehen.

## Patentansprüche

1. Vorrichtung (V) zur form- und/oder kraftschlüssigen Verbindung wenigstens eines Werkstücks (W) mit wenigstens einem Verbindungselement, aufweisend
- wenigstens einen Roboter (1) zur Positionierung des Werkstücks (W),
- wenigstens eine Spindel (2) zum Verbinden des Verbindungselements (S) mit dem Werkstück (W),
- wenigstens ein Auflager (31,32,33) zur Stabilisierung des Werkstücks (W) während der Verbindung des Verbindungselements (S) mit dem Werkstück (W),
wobei ein Kontaktbereich des Auflagers (33), welcher während der Verbindung des Verbindungselements mit dem Werkstück (W) mit dem Werkstück (W) in Kontakt steht, im Wesentlichen in der Flucht der Spindellängsachse (SA1) liegt und der Kontaktbereich kleiner als 0,01 m², insbesondere kleiner als 0,0001 m², ist,
- wenigstens ein zweites Auflager(31,32) zur Stabilisierung des Werkstücks (W) während einer Verbindung des Verbindungselements (S) mit dem Werkstück (W), wobei eine Auflagefläche des Auflagers (33) im Zustand der Auflagerung des Werkstücks (W) in einer bezüglich einer wenigstens im Wesentlichen orthogonalen Achse zur Spindellängsachse (SA1) in einer anderen Ebene liegt als eine Auflagefläche des zweiten Auflagers (31,32).

2. Vorrichtung (V) nach Anspruch 1, wobei das Auflager (33) und/oder wenigstens ein Auflagerelement (35) des Auflagers, welches den Kontaktbereich umfasst, entlang einer Auflagerlängsachse verfahrbar ausgebildet ist.

3. Vorrichtung (V) nach einem der vorhergehenden Ansprüche, aufweisend eine erste Steuereinheit (121) und eine zweite Steuereinheit (120), wobei die erste Steuereinheit (121) zur Steuerung des Roboters (1) vorgesehen ist und die zweite Steuereinheit (120) zur Steuerung des Auflagers (33), der Spindel (2) und der ersten Steuereinheit (121) vorgesehen ist.

4. Vorrichtung (V) nach einem der vorhergehenden Ansprüche, wobei der Roboter (1) ein Leichtbauroboter ist.

5. Vorrichtung (V) nach einem der vorhergehenden Ansprüche, wobei der Roboter (1) jeweils eine Armteillänge von weniger als 1 m, insbesondere weniger als 50 cm, aufweist.

6. Vorrichtung (V) nach einem der vorhergehenden Ansprüche, wobei der Roboter (1) an wenigstens einem Effektor wenigstens eine Werkstückaufnahmeeinheit (11) aufweist.

7. Vorrichtung (V) nach Anspruch 6, wobei die Werkstückaufnahmeeinheit (11) wenigstens einen Saugnapf (12) zur Aufnahme des Werkstücks (W) umfasst.

8. Vorrichtung (V) nach einem der Ansprüche 6 oder 7, wobei die Werkstückaufnahmeeinheit (11) wenigstens ein Gegenlager (13) zur Stabilisierung des Werkstücks (W) umfasst.

9. Vorrichtung (V) nach einem der vorhergehenden Ansprüche, wobei die Spindel (2) starr ist.

10. Vorrichtung (V) nach einem der vorhergehenden Ansprüche, wobei ein Endglied (23) der Spindel (2) entlang der Spindellängsachse (SA1) verfahrbar ist.

11. Vorrichtung (V) nach Anspruch 10, wobei das Endglied (23) der Spindel (2) um die Spindellängsachse (SA1) rotierbar ist.

12. Vorrichtung (V) nach einem der vorhergehenden Ansprüche, wobei die Spindel (2) eine Zuführungseinheit (21) zur automatischen Zuführung von Verbindungselementen (S) aufweist.

13. Vorrichtung (V) nach einem der vorhergehenden Ansprüche, aufweisend wenigstens eine Kamera und/oder wenigstens einen visuellen Sensor.

14. Verfahren zum form- und/oder kraftschlüssigen Verbinden wenigstens eines Werkstücks (W) mit wenigstens einem Verbindungselement (S) mit einer Vorrichtung (V) nach einem der Ansprüche 1 bis 13 mit folgenden Schritten:
- Aufnahme des Werkstücks (W) durch die Werkstückaufnahmeeinheit (11),
- Positionierung des Werkstücks (W) durch den Roboter (1),
- Kontaktierung des Kontaktbereichs des Auflagers (33) mit dem Werkstück (W),
- Verfahren des Endglieds (23) der Spindel (2) in Richtung der Spindellängsachse (SA1),
- Verbinden des Verbindungselements (S) mit dem Werkstück (W) durch eine Rotationsbewegung der Spindel (2).

## Claims

1. Apparatus (V) for connecting at least one workpiece (W) to at least one connection element in a form-fit and/or force-fit manner, having
- at least one robot (1) for positioning the workpiece (W),
- at least one spindle (2) for connecting the connection element (S) to the workpiece (W),
- at least one support (31, 32, 33) for stabilising the workpiece (W) during the connection of the connection element (S) to the workpiece (W),
wherein a contact region of the support (33), which is in contact with the workpiece (W) during the connection of the connection element to the workpiece (W), is substantially in alignment with the spindle longitudinal axis (SA1) and the contact region is smaller than 0.01 m², in particular smaller than 0.0001 m²,
- at least a second support (31, 32) for stabilising the workpiece (W) during a connection of the connection element (S) to the workpiece (W), wherein, in the state in which the workpiece (W) is supported in an at least substantially orthogonal axis relative to the spindle longitudinal axis (SA1), a support surface of the support (33) is disposed in a different plane than a support surface of the second support (31, 32).

2. Apparatus (V) according to claim 1, wherein the support (33) and/or at least one support element (35) of the support which comprises the contact region is embodied to be movable along a support longitudinal axis.

3. Apparatus (V) according to one of the preceding claims, having a first control unit (121) and a second control unit (120), wherein the first control unit (121) is provided for controlling the robot (1) and the second control unit (120) is provided for controlling the support (33), the spindle (2) and the first control unit (121).

4. Apparatus (V) according to one of the preceding claims, wherein the robot (1) is a lightweight robot.

5. Apparatus (V) according to one of the preceding claims, wherein the robot (1) has a partial arm length of less than 1 m, in particular less than 50 cm, in each case.

6. Apparatus (V) according to one of the preceding claims, wherein the robot (1) has at least one workpiece receiving unit (11) on at least one effector.

7. Apparatus (V) according to claim 6, wherein the workpiece receiving unit (11) comprises at least one suction cup (12) for receiving the workpiece (W).

8. Apparatus (V) according to one of claims 6 or 7, wherein the workpiece receiving unit (11) comprises at least one counter-bearing (13) for stabilising the workpiece (W).

9. Apparatus (V) according to one of the preceding claims, wherein the spindle (2) is rigid.

10. Apparatus (V) according to one of the preceding claims, wherein an end piece (23) of the spindle (2) is movable along the spindle longitudinal axis (SA1).

11. Apparatus (V) according to claim 10, wherein the end piece (23) of the spindle (2) is rotatable about the spindle longitudinal axis (SA1).

12. Apparatus (V) according to one of the preceding claims, wherein the spindle (2) has a feed unit (21) for automatically feeding connection elements (S).

13. Apparatus (V) according to one of the preceding claims, having at least one camera and/or at least one visual sensor.

14. Method for connecting at least one workpiece (W) to at least one connection element (S) in a form-fit and/or force-fit manner with an apparatus (V) according to one of claims 1 to 13, with the following steps:
- receiving the workpiece (W) by means of the workpiece receiving unit (11),
- positioning the workpiece (W) by means of the robot (1),
- fitting the contact region of the support (33) to the workpiece (W),
- moving the end piece (23) of the spindle (2) in the direction of the spindle longitudinal axis (SA1),
- connecting the connection element (S) to the workpiece (W) by means of a rotational movement of the spindle (2).

## Revendications

1. Installation (V) de liaison à complémentarité de forme et/ou à coopération de force d'au moins une pièce (W) à au moins un élément de liaison, comportant
- au moins un robot (1) de mise en position de la pièce (W),
- au moins une broche (2) de liaison de l'élément (S) de liaison à la pièce (W),
- au moins un appui (31, 32, 33) de stabilisation de la pièce (W) pendant la liaison de l'élément (S) de liaison à la pièce (W), dans lequel une zone de contact de l'appui (33), qui est en contact avec la pièce (W) pendant la liaison de l'élément de liaison à la pièce (W), est sensiblement alignée avec l'axe (SA1) longitudinal de la broche et la zone de contact est plus petite que 0,01 m², notamment plus petite que 0,0001 m²,
- au moins un deuxième appui (31, 32) de stabilisation de la pièce (W) pendant une liaison de l'élément (S) de liaison à la pièce (W), dans lequel une surface d'appui de l'appui (33), dans l'état de l'appui de la pièce (W), dans un plan par rapport à au moins un axe sensiblement orthogonal à l'axe (SA1) longitudinal de la broche, se trouve dans un plan autre qu'une surface d'appui du deuxième appui (31, 32).

2. Installation (V) suivant la revendication 1, dans laquelle l'appui (33) et/ou au moins un élément (35) de l'appui, qui comprend la zone de contact, est constitué de manière à pouvoir être déplacé le long d'un axe longitudinal de l'appui.

3. Installation (V) suivant l'une des revendications précédentes, comportant une première unité (121) de commande et une deuxième unité (120) de commande, dans laquelle la première unité (121) de commande est prévue pour la commande du robot (1) et la deuxième unité (120) de commande est prévue pour la commande de l'appui (33), de la broche (2) et de la première unité (121) de commande.

4. Installation (V) suivant l'une des revendications précédentes, dans laquelle le robot (1) est un robot de construction légère.

5. Installation (V) suivant l'une des revendications précédentes, dans laquelle le robot (1) a respectivement une longueur partielle de bras de moins de 1 m, notamment de moins de 50 cm.

6. Installation (V) suivant l'une des revendications précédentes, dans laquelle le robot (1) a au moins un effecteur d'au moins une unité (11) de réception d'une pièce.

7. Installation (V) suivant la revendication 6, dans laquelle l'unité (11) de réception d'une pièce comprend au moins une ventouse (12) de réception de la pièce (W).

8. Installation (V) suivant l'une des revendications 6 ou 7, dans laquelle l'unité (11) de réception d'une pièce comprend au moins une contre-portée (13) de stabilisation de la pièce (W).

9. Installation (V) suivant l'une des revendications précédentes, dans laquelle la broche (2) est rigide.

10. Installation (V) suivant l'une des revendications précédentes, dans laquelle un embout (23) de la pièce (2) peut être déplacé le long de l'axe (SA1) longitudinal de la broche.

11. Installation (V) suivant la revendication 10, dans laquelle l'embout (23) de la broche (2) peut tourner autour de l'axe (SA1) longitudinal de la broche.

12. Installation (V) suivant l'une des revendications précédentes, dans laquelle la broche (2) a une unité (21) d'amenée pour l'amenée automatique d'éléments (S) de liaison.

13. Installation (V) suivant l'une des revendications précédentes, comportant au moins une caméra et/ou au moins un capteur visuel.

14. Procédé de liaison à complémentarité de forme et/ou à coopération de force d'au moins une pièce (W) à au moins un élément (S) de liaison par une installation (V) suivant l'une des revendications 1 à 13, comprenant les stades suivants :
- réception de la pièce (W) par l'unité (11) de réception d'une pièce,
- mise en position de la pièce (W) par le robot (1),
- mise en contact de la zone de contact de l'appui (33) avec la pièce (W),
- déplacement de l'embout (23) de la broche (2) dans la direction de l'axe (SA1) longitudinal de la broche,
- liaison de l'élément (S) de liaison à la pièce (W) par un mouvement de rotation de la broche (2).
